(19) Europäisches Patentamt
European Patent Office
Office européen des brevets

(11) **EP 1 998 534 B1**

(12) **EUROPEAN PATENT SPECIFICATION**

(45) Date of publication and mention
of the grant of the patent:
**03.06.2015 Bulletin 2015/23**

(51) Int Cl.:
***H04L 29/08*** *(2006.01)*

(21) Application number: **08153371.3**

(22) Date of filing: **27.03.2008**

(54) **Method and apparatus for recording transactions with a portable logging device**

Verfahren und Vorrichtung zur Aufzeichnung von Transaktionen mit einer tragbaren Protokollierungsvorrichtung

Procédé et appareil d'enregistrement de transactions avec un dispositif de journalisation portable

(84) Designated Contracting States:
**DE FR GB**

(30) Priority: **28.03.2007 US 692784**

(43) Date of publication of application:
**03.12.2008 Bulletin 2008/49**

(73) Proprietor: **Ricoh Company, Ltd.**
**Tokyo 143-8555 (JP)**

(72) Inventors:
• **Hart, Peter**
**Menlo Park, CA 94025-7022 (US)**
• **Gormish, Michael**
**Menlo Park, CA 94025-7054 (US)**
• **Wolff, Greg**
**Menlo Park, CA 94025-7022 (US)**
• **Piersol, Kurt**
**Menlo Park, CA 94025-7022 (US)**

(74) Representative: **Schwabe - Sandmair - Marx**
**Patentanwälte**
**Stuntzstraße 16**
**81677 München (DE)**

(56) References cited:
EP-A- 1 594 252      US-A- 5 978 475
US-A1- 2005 091 229      US-B1- 6 640 301

**Description**

**FIELD OF THE INVENTION**

The present invention relates to the field of digital object distribution; more particularly, the present invention relates to associating information using document logs.

**BACKGROUND OF THE INVENTION**

Many document management systems have been proposed and implemented in the past. These document management systems include systems that store documents and handle the coordination of requests with responses. However, these systems do not cut across organizational boundaries and do not perform the synchronization that is necessary.

A Web log is an online document management tool used to record information. Web logs use a client-server framework to permit the addition or subtraction of content from one or more client locations to a server that hosts the web log. Because one server hosts each web log, web logs are typically anchored to a particular HTTP location.

U.S. Patent application serial no. 10/887,998, entitled "Synchronizing distributed work through document logs," filed July 9, 2004 by Wolff, Gregory J,; et al., (Publication No. 20060010095) discloses synchronizing distributed work through the use of document logs. As disclosed, metadata entries are added to a set that is associated with a digital object, such as a document. The metadata entries are accessed using unique identifiers that reference the metadata entries. In one embodiment, each unique identifier is based on the contents of the metadata entry.

US 5,978,475 discloses a hash-based method for encrypting sensitive information which is communicated between a trusted and an untrusted computer.

**SUMMARY OF THE INVENTION**

Method and apparatus for recording transactions with a portable logging device are described. In one embodiment, examining a first log stored on a first, portable device and a second log associated with a second device; and determining that the portable device interacted with the second device based on one or more entries in the first and second logs.

**BRIEF DESCRIPTION OF THE DRAWINGS**

The present invention will be understood more fully from the detailed description given below and from the accompanying drawings of various embodiments of the invention, which, however, should not be taken to limit the invention to the specific embodiments, but are for explanation and understanding only.

> **Figure 1** illustrates generating and storing an entry in a log;
> **Figure 2** illustrates generating and storing a hash of media in a log;
> **Figure 3** is a flow diagram of one embodiment of a process for entangling a pair of logs.
> **Figure 4** is a flow diagram of one embodiment of a process for performing entanglement detection.
> **Figure 5** is a diagram illustrating a portable logging device and a second device.
> **Figure 6** illustrates a flow diagram of one embodiment of a process for interacting between a portable logging device and a second device.
> **Figure 7** is a flow diagram of one embodiment of a process for exchanging information between a portable logging device and a second device.
> **Figure 8** is a flow diagram of one embodiment of a process for authenticating an interaction between a portable logging device and a second device.
> **Figure 9** is a block diagram of a computer system that may perform one or more of the operations described herein.

**DETAILED DESCRIPTION OF THE PRESENT INVENTION**

A portable logging device and method for using the same are disclosed. In one embodiment, the portable logging device is able to generate media identifiers and log media identifiers and media in a log that corresponds to transactions and/or interactions with another device (e.g., a copier, MFP, a peripheral, PC, etc.) regarding the media. In one embodiment, the portable logging device is also able to provide an upgrade to such a device.

In the following description, numerous details are set forth to provide a more thorough explanation of the present invention. It will be apparent, however, to one skilled in the art, that the present invention may be practiced without these specific details. In other instances, well-known structures and devices are shown in block diagram form, rather than in detail, in order to avoid obscuring the present invention.

Some portions of the detailed descriptions which follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description below. In addition, the present invention is not described with reference to any particular programming language. It will be appreciated that a variety of programming languages may be used to implement the teachings of the invention as described herein.

A machine-readable medium includes any mechanism for storing or transmitting information in a form readable by a machine (e.g., a computer). For example, a machine-readable medium includes read only memory ("ROM"); random access memory ("RAM"); magnetic disk storage media; optical storage media; flash memory devices; electrical, optical, acoustical or other form of propagated signals (e.g., carrier waves, infrared signals, digital signals, etc.); etc.

Media Identifiers, Sequential Logs, and Entangling

*Media Identifiers for Physical and Electronic Items*

Many of the inventions described here-in require the ability to refer to a document, video, song, piece of paper, or electronic file by an identifier. For purposes herein, the document, video, song, piece of paper, or electronic file is referred herein to as the media. An identifier used to identify the media is called a media identifier and, in one embodiment, is a string of bytes.

There are several properties of the association between the media and the media identifier which are useful in the inventions: A) it is beneficial that anyone who has the media can determine an identical media identifier; B) it is beneficial that it is difficult for anyone to find two distinct pieces of media that have the same media identifier; C) it is beneficial that the media identifier does not reveal anything about the content of the media; and D) it is beneficial that any change to the media would result in a different identifier.

There are multiple ways to assign an identifier to a piece of media. For an electronic file, in one embodiment, the identifier is generated by applying a cryptographic hash function on the bytes of the file. Cyptographic hash functions are well known in the security literature and have been standardized in various federal and international standards, and software toolkits.

Cryptographic hash functions meet the properties described above so well that we will sometimes refer to the process of determining an identifier for a piece of media as "hashing" and sometimes refer to the media identifier as a "hash," even if a different technique is used to form the identifier.

There are other ways to assign identifiers to files. For example, a server could keep a copy of every file and assign a previously unused string randomly to each new file. This method works very well for properties B, C, and D, but only meets property A if everyone can contact the server, and the server cannot be changed, even if taken off-line by, for example, by a denial of service attack.

It is also possible to use functions that are simpler than cryptographic hashes to identify files. For example, a simple checksum can be used on a file, and the result used as a media identifier. This meets properties A and C, but not property B. Some changes result in a different checksum but a few do not, so property D is not always met. However, for some applications these properties may be less important. Also some applications may have very structured data, such that it is difficult to find two pieces of media that both have the same checksum and follow the rules of the structured data.

Pieces of paper can be assigned an identifier, for example, by scanning the paper and computing a cryptographic hash of the scanned file that results. However, because of noise in the scanning process, different scans of the paper often lead to different electronic files, and thus different identifiers. For this reason it is sometimes convenient to affix a barcode or other machine readable identifier (e.g., a RFID tag) to a piece of paper or other physical device. Use of a machine readable ID makes it easy for anyone to get the same identifier; however, it is also possible to attach the same ID value to different media, so property B is not well met in this case.

In one embodiment, to overcome the weakness of machine readable ID's, a form of "finger printing" is used to identify physical media. Since finger printing associates values with the physical device, it can be very hard or impossible to make a new "finger" or piece of paper with the same finger print. However, in many cases, the "finger print" reveals something about the physical media, also it may be possible to change the physical media slightly without changing the finger print. Thus, in such a case, properties C and D might not be held perfectly.

There may be multiple identifiers associated with a single piece of media. For example, there could be an identifier formed by using the SHA1 cryptographic hash function on the media, and an identifier formed by using the SHA256 or MD5 cryptographic hashes on the same media. In one embodiment, keyed-hash message authentication codes or HMAC are used to compute media identifiers. These message authentication codes like HMAC-MD5 or HMAC-SHA 1 can be better than the underlying cryptographic hash functions (MD5 and SHA1) for properties B, C, and D because they use a key which can change. However, property A is more difficult with message authentication codes because in order to compute the same hash, all places computing it must have access to the key.

There can be identifiers associated with different formats of the same data. For example, the hash of a file, and the hash of the same file compressed losslessly with ZIP, are different identifiers, but they are associated with the same final data.

There can also be identifiers formed for part of the media. For example, in the case of video, there could be an identifier formed for each different frame. Because of packet loss in a network, two people watching the same video might not end up with the same file, and thus they would be unable to compute the same identifier. However, each person would receive several identical frames of the video. So if they computed a hash of each frame they received, they could determine that they were watching the same video because of the large number of identical hashes.

To continue the same example, two people watching the same video might watch it at different resolutions, in this case no two frames will have the same hash. However, if the video was stored in a scalable method, e.g. JPEG 2000 part 3, then the lowest resolution portion of the video may be the same for both viewers, and common hashes could be determined.

When video is not stored in a scalable format, a server typically stores multiple versions of a video at different resolutions. The server can thus compute a hash of all frames of all resolutions it has stored, and thus any frame received completely by a client can be hashed and the hashes later compared with those on the server to identify the video.

In addition to video, there are other types of media that may be partially transmitted. For example, part of a large XML document may be requested. The request may be, for example, by an XPATH query. The portion of the document received by the client is different from the whole document available at the server. However, it is possible to compute hashes for portions of the documents (e.g., subtrees of the XML document) or even contents of particular nodes in the XML document. A client with a subset ofthe XML document can compute hashes on the subtrees and nodes that it receives, and these can be matched against a large list of hashes at the server.

For any particular media, relevant subsets of the data can often be determined and these subsets can be hashed in addition to the hash of the complete media.

In some cases, the data is processed so that the portion delivered does not actually appear in the data as a whole. For example, a color image might be converted to grayscale and then delivered, or the sum of entries in a spreadsheet might be computed and reported. However, if the data exists at two places (e.g. the server and client), then even if only modified data is delivered, it is possible for both server and client to record hashes of the modified data and the association between the received data and it's source can be made at a later time.

In some cases, the "server" might not have the modified data initially. For example, if an intermediate processing device performs the computation on the data. However, if the type of computation is known, it could be later run on the server to associate the original media with the received data. For example, a server might send a high bit rate video, but due to network congestion, this may be truncated by removing a quality layer at an intermediate router. A client thus receives a medium bit-rate video that can be hashed. In order to determine the same hashes, the server runs the hash on the the high rate video without the quality layer that the router discarded.

*Sequential Logs*

Many of the inventions described herein involve recording a sequence of events. The record of events is referred to as a "log" or "log-file," similar to the relationship with a log book used to record the events of a ship or aircraft, and the log files used to record the actions taken on computer systems. In one embodiment, the logs have a property that it is easy to add a new record to the end, but difficult to change a record already in the log without such a change being easily detected.

Unlike a traditional "log book" or "log file", in one embodiment, it is desirable for the log not to disclose much information about the event being recorded. In this way, the log file may be made available to a large number of people or systems so that some records can be checked, but the content of most of the records can remain secret.

There are several possible implementations of a log which have different levels of performance with respect to the goals of easy to add, hard to change, and partial disclosure of information.

A conceptually simple way to implement a log is a tamper proof write once memory. Each record is written in order into the memory. This meets the goal of easy to add and hard to modify, but it is difficult to remotely verify that the "tamper proof" memory has not been changed.

One method of implementing a log is to create a sequence of records where each record includes a hash of some information from the previous record, and the contents of the current record. For example, let the message portion of the ith record be called $M_i$ and a rolling checksum called $r_i$. This rolling checksum for the ith record can be computed as:

$$r_i = hash(\ r_{i-1}\ .\ M_i\ )$$

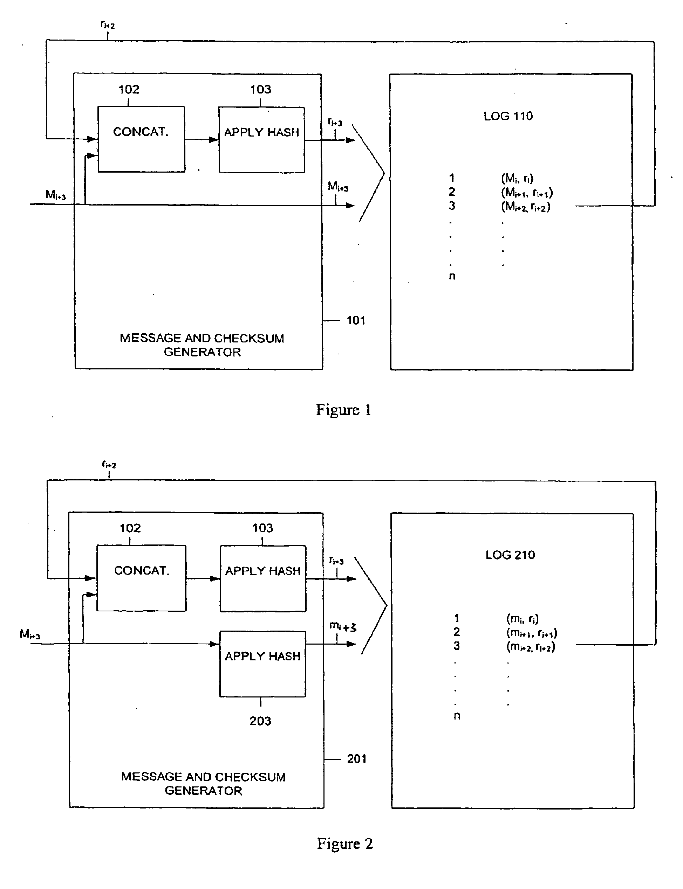

where the message and the previous checksum are concatenated (represented by the ".") and provided to the hash function. The log in this case consists of a sequence of messages and checksums ($M_i$, $r_i$). In one embodiment, an addition to the log may be made by taking the last checksum and the current message, concatenating the two, and computing the hash. This is shown in Figure 1. Referring to Figure 1, to create a new message and checksum pair, a message and checksum generator 101 receives a new message, $M_{i+3}$ and the checksum $r_{i+2}$ of the last entry in log 110. A concatenation module 102 concatenates the previous checksum $r_{i+2}$ with the message $M_{i+3}$. Hash module 103 applies a hash function, as described herein, to produce the next checksum $r_{i+3}$. Message $M_{i+3}$ and checksum $r_{i+3}$ are then stored in log 110. Note that message and checksum generator 101 may comprise a processing unit (e.g., a microprocessor) with concatenation module 102 and hash unit 103 being software modules of instructions that are executed by the processing unit. Alternatively, these functions could be implemented in hardware.

If one of the messages in the log is modified, or one of the checksums in the log is modified, then the subsequent checksum will be incorrect. Thus modifying a record would require changing the message and all subsequent checksums. If one of the checksums is copied and stored elsewhere, then any modification prior to that checksum can be detected. If a modification is made without updating the checksums, then recomputing the hashes for the rolling checksums in the log reveals the error. If the hashes are all changed so the log is self consistent, then they won't match the externally saved value.

As set forth above, the hash function could be a simple checksum, be preferably is a cryptographic hash function.

This method meets most of the goals for the log, but there are variations which provide additional benefits.

One modification is to store the hash of the message rather than the message itself in the log. Thus, if $m_i$ is defined as:

$$m_i = hash(M_i),$$

then a log can be defined as a sequence of ($m_i$, $r_i$), with $r_i$ being a checksum of only the message hash and the previous checksum:

$$r_i = hash(\ r_{i-1}\ .\ m_i).$$

This is shown in Figure 2. Referring to Figure 2, to create a new message and checksum pair, a message and checksum generator 201 receives a new message, $M_{i+3}$ and the checksum $r_{i+2}$ of the last entry in log 210. A concatenation module 102 concatenates the previous checksum $r_{i+2}$ with the message $M_{i+3}$. Hash module 103 applies a hash function, as described herein, to produce the next checksum $r_{i+3}$. Hash module 203 applies a hash function to message $M_{i+3}$ to produce hashed message $m_{i+3}$. In one embodiment, the hash function applied by hash module 203 is the same as the hash function applied by hash module 103; alternatively, the hash function applied by hash module 203 is not the same as the hash function applied by hash module 103. Hashed message $m_{i+3}$ and checksum $r_{i+3}$ are then stored in log 210. Message and checksum generator 101 may comprise a processing unit (e.g., a microprocessor) with concatenation module 102, hash unit 103, hash unit 203 being software modules of instructions that are executed by the processing unit. Alternatively, these functions could be implemented in hardware.

This method has the advantage of producing fixed length records provided that the hash function has a fixed length, which is commonly true. This method has the further advantage of not having any message content in the log. Thus, if the message was some customer information (e.g., a purchase order with name, address, and order information), it would not be desireable to publish the message. However, if the hash used does not reveal information about the message, then the entire sequence of ($m_i,r_i$) i.e. the log, can be published without publishing this information.

In some cases, it is desirable to have a log with more information than solely the hash of the message. For example, it is often useful to have the time stored in the log or the type of information of the log entry stored in the published log. This makes it easier to search the log for specific records. Thus, if the information in a record that is readable is defined as the "plain text", called $t_i$, then in one embodiment, the log consists of a sequence of ($t_i$, $m_i$, $r_i$), and each checksum, $r_i$ is computed as:

$$r_i = hash(r_{i-1} . t_i . m_i)$$

This format is quite general because the $t_i$ portion could contain further structure (e.g., always a date and a type and a file name) while the messages could also be structured. Of course, the order of the previous rolling checksum, the current message or message hash, and "plain text" information can be changed, as long as the order is known to all applications needing to generate or verify a checksum.

Another way to provide partial access to information in a log is to encrypt some of the information stored in the log. Suppose the encrypted information for a log is $E_i$, and the hash of $E_i$ is $e_i$. In one embodiment, either $E_i$ or $e_i$ can be stored in the log. Thus, a log entry might consist of ($t_i$, $m_i$, $E_i$, $r_i$), i.e. a plain text portion, a hash of the message, some encrypted data and a hash of the previous hash in the log and concatenated with the hash of the message. In general, there could be a mix of times and a record might have several plain text portions, several encrypted portions, and several hashes of messages.

In one embodiment, the format for log entries is a set of header "lines" and a body with data, e.g.
Author: gormish
SHA1: 1bff5d8cda307b5f3f3757cb25588a54cfb01ce0
Content-Length: 567
567 bytes of DATA

In one embodiment, this type of format is used for http and email. Thus, several well-known headers have been defined and could be used in a log.

Different keys can be used for different encrypted entries or different types of encrypted entries in the log. For example, all entanglement information might be encrypted with one key, all classification values with a different key. If the log is associated with a single document and that document is encrypted, then the entries in the log might be encrypted with the same key as used for the document. That way, anyone with access to the document is also granted access to the information in the log.

In one embodiment, a log supports different multiple rolling hashes or different types of hashes, i.e. hashes computed with different cryptographic hash functions. For example, in one embodiment, the value $r_i$ is as follows:

$$r_i = hash(r_{i-1} . t_i . m_i)$$

and the value of $t_i$ specifies which hash function was used (e.g., MD5, SHA1, SHA256, etc.). In one embodiment, a log entry with two different rolling checksums has entries like:

$$(t_i, m_i, r_i, s_i)$$

where $r_i$ is computed as:

$$r_i = SHA1(r_{i-1} \, . \, t_i \, . \, m_i)$$

and $s_i$ is computed as:

$$s_i = SHA256(s_{i-1} \, . \, t_i \, . \, m_i)$$

This allows the same log to be used with systems that only support one type of hash, and if one hash function is broken, the other hash function may still be valid, and the combination of both is likely to be even harder to break. Other arrangements with logs using two or more hash functions would be apparent to those skilled in the art.

It should be noted that log entries can be added which retrospectively add new hash chains to a log. Suppose a log consists of pairs of messages and rolling hashes $(M_i, r_i)$, with ri = SHA1(ri-1, Mi), with i between 1 and N. New messages can be added to the log which consists of the old messages and a new rolling hash computed with a different hash function. Thus, message N+1 could be the first message concatenated with a rolling checksum computed using a new hash function. In general:

$$M_{N+1} = M_i \, . \, s_i$$

where

$$s_i = SHA256(s_{i-1}, M_i)$$

This allows the later repair of logs whose hash functions have been compromised, by adding a new hash covering the same material. Any number of hash functions can be applied retrospectively in this fashion, as hash functions are compromised and new functions are discovered.

In one embodiment, a second hash function makes use of the first hash function in its computation. For example,

$$s_i = SHA256(s_{i-1} \, . \, t_i \, . \, m_i \, . \, r_i)$$

or

$$s_i = SHA256(r_{i-1} \, . \, s_{i-1} \, . \, t_i \, . \, m_i)$$

*Storage for a Log*

In one embodiment, a log is stored sequentially in a single file. This sort of log is very easy to create because the rolling hash from the last entry is read, and new data is appended to the end of the file. If the entries are fixed length, it is easy to find a specific entry in the file. In many cases, a single file is sufficient especially if the log is for a single document that does not have too many entries.

In some cases, the log may become very long, usually because a record of a common event is being made. If a log is used to accumulate data from multiple sources, there could be several entries per second. In this case, it may be useful to break a log into multiple files, for example, after every 10,000 entries.

In another embodiment, each log entry is stored in a separate file. In this case, a pointer to the most recent entry is used for fast access. In one embodiment, the record has a sequence number inside it, and the most recent record can be determined by examining all record numbers. One technique is to name the file with the rolling hash, and include the rolling hash of the previous record in the file. In this way, it is possible to go from the most recent entry back through all the entries by following the pointer.

In another embodiment, each log entry is a record in a database. This is quite useful to enable rapid search for a particular message hash, rolling hash, range of times, plain text, or whatever the rest of the content of the log entry contains. A database implementation is useful when large numbers of entries are being made in the log because databases provide transactional integrity.

*Write Once Memory*

In addition to the mathematical methods of insuring that events occur in sequence, in one embodiment, a physical tamper proof device is used to store a sequence of events. In one embodiment, the physical tamper proof device is a write once memory that stores the hashes of messages in order. Changing the entries in this sort of log would require changing the memory.

While write once memory is simple, it is hard to verify remotely that it hasn't been tampered with. Thus, in one embodiment, a tamper proof system provides digital signatures or other authentication techniques for its content.

*Entangling*

Because it is relatively easy to modify a single log, in one embodiment, information is exchanged between logs in such away that modification of the entries in one log can be detected by examining another log. It is important to store information in the second log that depends on all of the information in the first log. For the logs defined previously, the rolling checksum has that property. Each checksum depends on the previous checksum and the other data in the log entry. Thus, if any part of a log entry is changed, the rolling checksum changes, and the rolling checksums after that point also change. Regardless of the computation function used for the "hash," if the messages or records are longer than the hash, there exist multiple messages or records that have the same hash. However, if the function used for the rolling checksums are well chosen, e.g. a cryptographic hash function, it is extremely difficult to find these messages.

There are several ways to store information from one log in another log. This process is called entangling because after storing information from one log in another, all future rolling checksums in the second log depend on the information in the first log.

In one embodiment, the log being used is storing pairs of message hashes and rolling hashes, i.e. $(m_i, r_i)$, and the message hash for an entry in the second log is replaced by the rolling hash from the first log. Thus, all rolling hashes after that entry in the second log depend on the rolling hash from the first log.

While this is the simplest embodiment, the limited amount of information stored when entangling, can make it difficult to determine what the nature of the entanglement is. Thus, in one embodiment, additional information is included in the log entry used for entanglement. For example, those logs using a type value can set the type to indicate that the data is not a "regular message" but an "entanglement entry." Further, instead of using a rolling checksum directly in place of the message hash, a message can be formed which contains the rolling hash from the first log and the location of the first log (e.g., a server name, a log name, a file name, URL, etc.). In one embodiment, the location of the rolling hash in the first log is included (e.g. a sequence number, date, etc.). This embodiment allows a log to be followed backwards and allows determination of the other logs on which the current log depends.

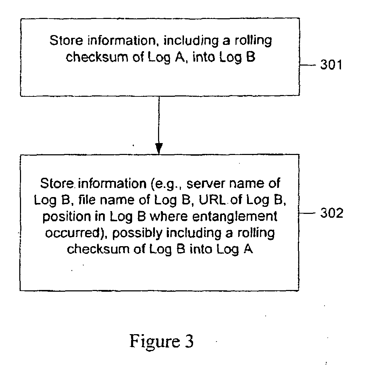

In many case, it is desirable to determine which logs depend on a first log. In order to facilitate this, information can be stored in both logs when an entanglement is made. Figure 3 is a flow diagram of one embodiment of a process for entangling a pair of logs. The process is performed by processing logic that may comprise hardware (circuitry, dedicated logic, etc.), software (such as is run on a general purpose computer system or a dedicated machine), or a combination of both.

Referring to Figure 3, the process begins by processing logic storing information, including the current rolling checksum of log A into a log entry in log B (processing block 301).

Next, processing logic stores information about log B in log A (processing block 302). In one embodiment, the information stored in log A about log B may include the server name, file name, or URL of log B and the position in the log where the entanglement is stored. In one embodiment, the information stored in log A may also include a rolling checksum from log B. If this checksum is stored, the entanglement is both from log B to log A and from log A to log B.

*Verification Procedure*

In many situations, it is necessary to determine if a log has been modified since it was created. This is best done by software, computer systems, and people independent from the log generation hardware, software, and people.

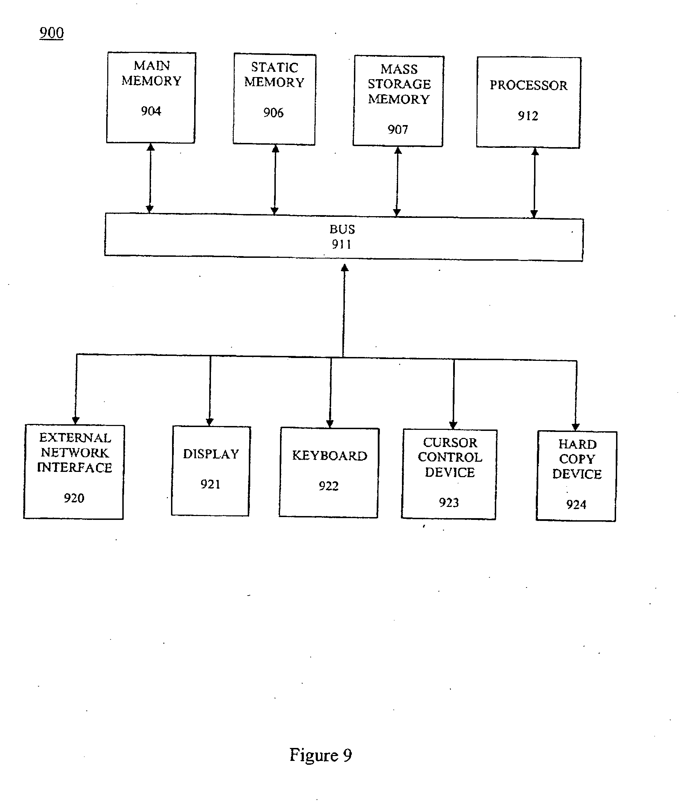

In one embodiment, to determine if a log is self consistent, verification software (such as in a computer system of Figure 9 (or dedicated machine) recomputes the rolling hash for each entry in the log. If the rolling hash computed by the verification software matches the rolling hash stored in the log, then that entry has not been changed unless the hash function has been compromised. For purposes herein, the hash function "being compromised" means two distinct sequences of bytes have been found that yield the same hash.

To determine if entries in a log are consistent across multiple logs, the entries must be consistent from the message of interest up to and including a rolling checksum that is stored (entangled) in another log. The entries in the second log must be self consistent before and after the entanglement entry.

*An Example of an Entangling Detection Procedure*

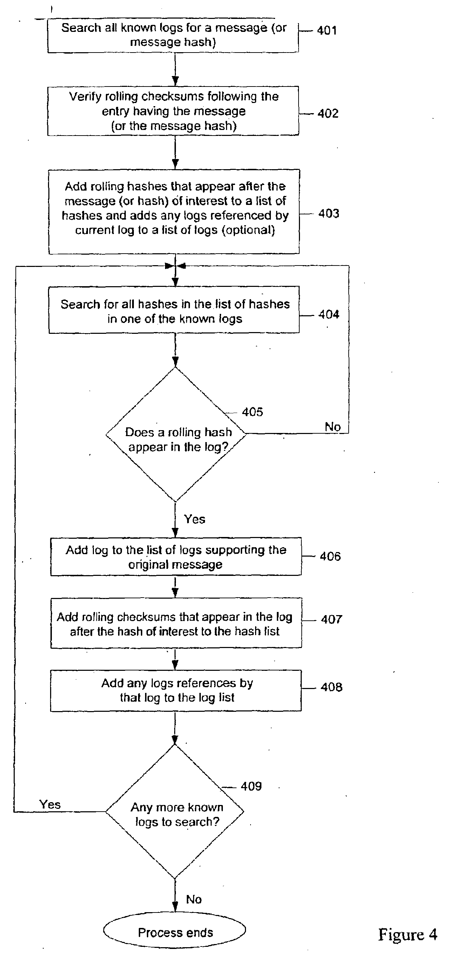

If a third party wishes to determine the validity of a message stored in a log some time after the entry was made and entangled with other logs, entanglement detection allows all servers which have entries that are consistent with the message to be determined. Figure 4 is a flow diagram of one embodiment of a process for performing entanglement detection. The process is performed by processing logic that may comprise hardware (circuitry, dedicated logic, etc.), software (such as is run on a general purpose computer system or a dedicated machine), or a combination of both.

Referring to Figure 4, the process begins by processing logic initializing a list of servers that have evidence to the empty set, initializing the list of messages or hashes of interest to the single message or hash desired and searching for the message or message hash of interest on all known logs (processing block 401). If the message or its hash is not found anywhere, no verification is possible and the process ends.

If a message or hash of interest is found, then the processing logic verifies the rolling checksums following the entry containing the message or hash, for every log where the message or message hash is found (processing block 402). In one embodiment, this is done by recomputing the checksums $r_i$ for the log using the verification software.

Processing logic adds all rolling hashes that appear after the hash of interest to a list of hashes, and adds any logs referenced by the current log to a list of logs of interest (processing block 403). Some logs will not list other logs, in which case there is nothing to perform for this sub-step.

Processing logic searches for all hashes in the hashes of interest list in one of the known logs that hasn't been searched (processing block 404). Afterwards, processing logic tests whether a rolling hash appears in the log (processing block 405). If not, the process transitions to processing block 404 where the process continues. If a rolling hash appears in a log, processing logic adds that log to the list of logs with evidence about the original message or hash (processing block 406), and adds all rolling checksums that appear in the log after the hash of interest to the hash list (processing block 407) and adds any logs referenced by that log the log list (processing block 408).

Processing logic then checks whether there are any more known logs to search (processing block 409). If not, the process ends. If so, processing transitions to processing block 404 and repeats the process until no new hashes are added to the list of hashes of interest, and no new logs are added to the list logs.

In general, many logs may be stored on the same device, same office, or same company. However, if a log is entangled with logs on multiple physical devices, or with logs which are under the control of different companies, then someone verifying the logs will have more confidence that the log has not changed. This benefit of entangling with different devices means that the logs should be able to store addresses of entangled logs that cross company and device boundaries. One way to do this is to use a URL to identify a log.

The python source code below determines logs that confirm the message hash in another log. This source code is designed to work for a particular form of log that doesn't contain references to other logs. Thus, it only finds evidence in the logs it initialized to check and new hashes are searched for only in the known logs. The source code is designed to access logs from multiple independent http servers. The source implementation currently uses only one log per sever, but the URLs could be modified to allow multiple logs per server.

The following sample software may be used to determine valid entanglements:

```
'''
Program to examine a set of servers for a given hash or file, then look for the hash chains
leading from that document to other servers.
'''

import sys
from Crypto.Hash import SHA256
import urllib

from optparse import OptionParser

parser = OptionParser()
parser.add_option("-f", "--file", dest="filename",
                  help="Find servers who know about file", metavar="FILE")
parser.add_option("--hash", dest="hash",
                  help="Find servers who know about hash")
parser.add_option("-q", "--quiet",
                  action="store_false", dest="verbose", default=True,
                  help="don't print status messages to stdout")
```

```
(options, args) = parser.parse_args()

hashlist = []
if options.hash:
    hashlist.append(options.hash)
if options.filename:
    try:
        f = open(options.filename,"rb")
        hf = SHA256.new()
        blocksize = 32*1024
        while True:
            data = f.read(blocksize)
            hf.update(data)
            if len(data) < blocksize:
                break
        hashlist.append(hf.hexdigest())
    except IOError:
        print "Could not process file: %s" % options.filename

if len(hashlist) == 0:
    print "No hash or file supplied"
    parser.print_help()
    sys.exit()

unconnectedserverlist = ['http://localhost:9001/',
                         'http://localhost:9002/',
                         'http://localhost:9003/',
                         'http://localhost:9004/',
                         'http://localhost:9005/']

serverstatus = {} # what is the condition observed on each server

#List of servers that have a chain to the document in question
foundlist = []

#Evidence for each rolling hash
#Dictionary with rolling hash: key is hash, value is log entry that hashes to that key
evidencelist = {}

while( len(hashlist)> 0 and len(unconnectedserverlist) >0):
    #For the next hash, search the unconnected servers
    searchhash = hashlist.pop(0)
    for server in unconnectedserverlist:
        devicelog = SHA256.new(server).hexdigest()
        url = server + 'log?logUID=%s&messagehash=%s' % (devicelog,searchhash)
        try:
            if options.verbose:
                print "Trying url: " + url
            result = urllib.urlopen(url)
            #want a sequence number so I can get stuff after this, or a way to ask for all
checksums after the found event
        except IOError:
            continue
        line = result.readline() # we only check the first line which should be lowest sequence
number
        if (line.find('No Entries') >= 0): #Depends on way empty results are returned
            continue
        #split into (type,message,rchecksum)
        (seq,type,message,rchecksum) = line.split(':')
        if (searchhash != message):
            print "Error Server %s returned a match for %s that didn't match. Returned value: %s
message %s len1 = %d len2 = %d" % (server, searchhash, line,message,len(searchhash),len(message))
        else:
            if options.verbose:
                print "Adding found server: " + server
            foundlist.append((server,seq,message)) # Yea! # in the end we may want the whole
chain!
            serverstatus[server] = "Found Document or Hash Chain to Document"
            unconnectedserverlist.remove(server)
            # we want to get a previous hash for confirmation
```

```
if int(seq) >0:
    seq = str(int(seq) -1 )
else:
    print "Warning we will miss an item!"
url2 = server + 'log?sequence=%s-&logUID=%s' % (seq, devicelog)
try:
    if options.verbose:
        print "Trying url: " + url2
    result2 = urllib.urlopen(url2)
except IOError:
    continue
#Add all rolling hashes from the message entanglement on to the hash list (if they
verify)

data = result2.readlines()
line2 = data[0]
data = data[1:]
(seq2,type2,message2,rchecksum2) = line2.split(':')
prevchecksum = rchecksum2[0:64]
for line2 in data:
    (seq2,type2,message2,rchecksum2) = line2.split(':')
    rchecksum2 = rchecksum2[0:64] # drop new line
    # test rchecksum2
    testentry = prevchecksum + '\n'+ type2 + ':' + message2 + ':'
    confirmchecksum = SHA256.new(testentry).hexdigest()
    if confirmchecksum != rchecksum2:
        print "Failed to confirm checksum on server %s, seq %s" % (server, seq2)
        print testentry,len(testentry),confirmchecksum,rchecksum2
        serverstatus[server] = 'ERROR IN HASH CHAIN'
        break #do not add any checksums past the bad data
    evidencelist[rchecksum2] = testentry
    prevchecksum = rchecksum2

    if options.verbose:
        print "Adding hash to search for: " + rchecksum2
    hashlist.append(rchecksum2)

if options.verbose:
    print "\n\nFound a Log Chain to the following servers:"
    print foundlist
    print "\nEvidence"
    print evidencelist

print "\n\nServer reports for given hash"
for i in serverstatus.keys():
    print i, serverstatus[i]
```

In general, the technique described above to verify logs can involve a lot of operations. However, the complexity can be reduced by keeping better track of hashes and logs that have been previously searched. Complexity can also be reduced by only considering log entries occurring before a certain time, or searching certain logs first, for example if it is known that certain logs are used for entangling more often these can be searched earlier.

*Authentication via Logs*

The rolling checksum in a log can be used as part of an authentication mechanism. For example, knowledge of the most recent rolling checksum rN could be used as permission to write an additional entry to a log. A device keeping a log could insist that the most recent checksum be provided with the new log entry. By doing so, if two other devices know the current checksum, and both request to write to the log, only one will succeed. The first device to provide a new log entry will cause the checksum to change, and then the second device will not have the correct checksum. This technique provides a way to insure that new data is added to the log only if the provider of the data has the most up-to-date information about the log. Thus, the checksum can be used to as a form of "lock" on the log to prevent race conditions.

The above discusses using the rolling checksum to control access to the log, but the rolling checksum can also be used to prove that the same log is being used again. In this case, the full contents of the log should not be publicly available. Someone could make a first interaction with a system using a log, and store a message in that log, and provide the rolling hash to the system (e.g., perhaps a message is stored when a deposit is made to an account). Subsequently, when it is desired to make a withdrawal from the account, the system could ask for the rolling hash used to make the deposit. If more security is desired, in one embodiment, the system asks for information about that rolling hash (e.g., the hash of that rolling hash and a challenge string). The system could ask for several pieces of information about a previous interaction, that could only be answered by someone in possession of the log.

Portable Logging Devices

In one embodiment, logging and techniques described above are used by a portable logging device for recording transactions such as, for example, print and scan transactions. In one embodiment, the portable logging device also facilitates providing access to related documents.

In one embodiment, the portable logging device comprises a SIM card or other card-like device that has some computational capability. The card is insertable into a copier or other peripheral device and can compute a media identifier (e.g., a hash) of a document being scanned or otherwise being processed, and stores the media identifier on both the copier (or other peripheral device) and on the portable logging device. For example, the media identifier may be stored in a log on the portable logging device.

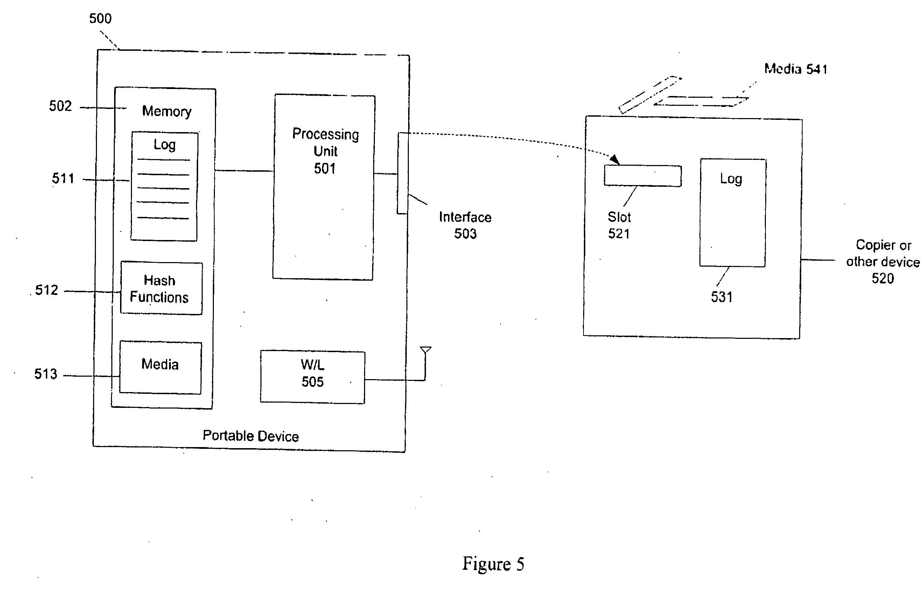

Figure 5 is a diagram illustrating a portable logging device and a second device, copier 520. In other embodiments, the second device could be an MFP, a scanner, or any other device, and copier 520 is only used as an example of the second device. Referring to Figure 5, portable device 500 includes a processing unit 501 (e.g., a processor, microcontroller, etc.) that performs functions and processes data. For example, processing unit 501 executes instructions to generate media identifiers (e.g., hash values) and log entries and stores the log entries in a log 511. Portable device 500 also includes memory 502 that stores log 511, instructions for hash functions and other functions 512 performed by processing unit 501, and may store media 513.

When portable device 500 is inserted into slot 521 of copier 520 and interfaces with copier 520 through interface 503, portable logging device 500 interacts with copier 520. In one embodiment, the portable logging device and the copier 520 interact such that the logs of the portable logging device and copier 520 are entangled. For example, if device 520 is a copier, when the copier scans a document, a media identifier is generated by device 520 or portable logging device 500 corresponding to the media scanned and the media identifier could be stored on logs in device 520 and/or portable logging device 500. The time of the scan and an indication that the operation was performed could also be logged. Thus, in one embodiment, the operation performed by device 520, the machine identifier of the media, and time information may be logged. Other operations include copying, sending, and printing.

Device 520 could also be a PC, another portable device, or even a device traditionally without computation like, for example, but not limited to an electronic doorway. In one embodiment, the portable logging device interacts with another device by exchanging rolling checksums with other devices, e.g. several security doors. Later examination of the log in the portable device and the log at the door can verify that the particular logging device was used to access the door. The media exchanged in this case might be a random challenge string. The portable logging device could add the string and compute a new rolling checksum, that the door can verify. With each access both, the door and the portable logging device can update the string that is expected to be used for the next access.

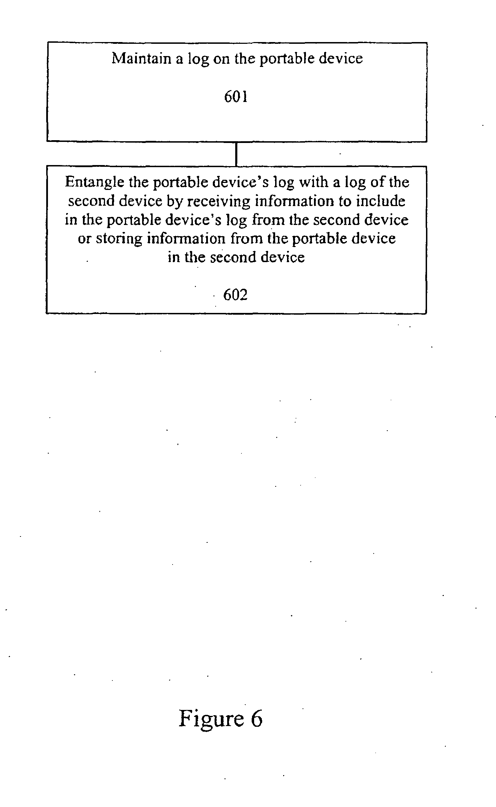

Figure 6 illustrates a flow diagram of one embodiment of a process for interacting between a portable logging device and a second device. The process is performed by processing logic that may comprise hardware (circuitry, dedicated logic, etc.), software (such as is run on a general purpose computer system or a dedicated machine), or a combination of both.

Referring to Figure 6, the process begins with processing logic maintaining a log on the portable device (processing block 601) and entangling the portable device's log with a log of the second device (e.g., a copier, scanner, MFP) by receiving information to include in the portable device's log from the second device (processing block 602).

In one embodiment, the interaction between the portable logging device and the second device is such that the second device receives a rolling checksum and a message and provides a new rolling checksum. For example, the portable logging device calculates the rolling checksum with the message for the second device and sends both the rolling checksum and the message for storage on the log of the second device. In return, the second device generates a new rolling checksum and provides it to the portable logging device. In one embodiment, the portable logging device stores this new rolling checksum and may use it when calculating a new rolling checksum on behalf of the second device during a future interaction between the two. In one embodiment, these two rolling checksums are calculated with the same hash functions; alternatively, different hash functions could be used.

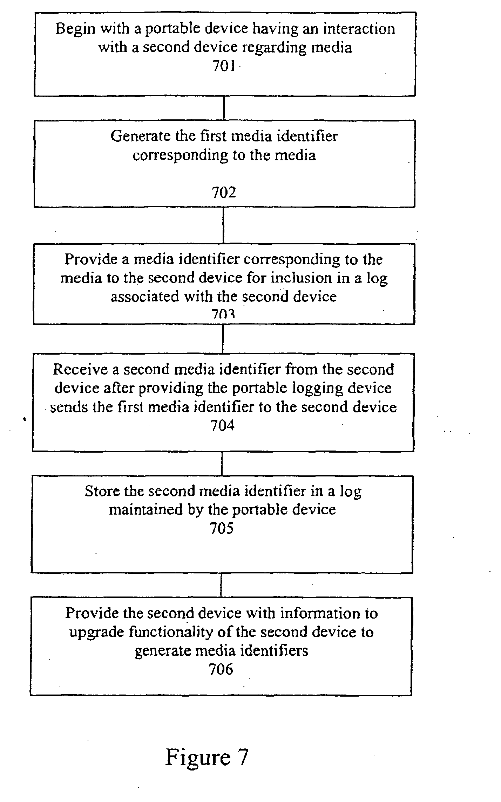

Figure 7 is a flow diagram of one embodiment of a process for exchanging information between a portable logging device and a second device. The process is performed by processing logic that may comprise hardware (circuitry, dedicated logic, etc.), software (such as is run on a general purpose computer system or a dedicated machine), or a combination of both.

Referring to Figure 7, the process begins with a portable device having an interaction with a second device regarding media (processing block 701). In one embodiment, the interaction involves the portable logging device providing the media to the second device. In another embodiment, the interaction may include the portable logging device receiving media from the second device.

Next, processing logic in the portable device generates the first media identifier corresponding to the media (processing block 702) and provides a media identifier corresponding to the media to the second device for inclusion in a log associated with the second device (processing block 703). Note that the portable device may generate the media identifier corresponding to the media in response to receiving the media from the second device. In one embodiment, the portable device providing the media identifier to the second device for inclusion in a log associated with the second device includes providing an indication to the second device that the media identifier corresponds to the media provided by the second device.

In one embodiment, the process of Figure 7 also includes processing logic receiving another media identifier from the second device after providing the portable logging device sends the first media identifier to the second device (processing block 704) and the portable device storing this second media identifier in a log maintained by the portable device (processing block 705). In one embodiment, the first and second media identifiers are generated with the same hash functions; alternatively, different hash functions could be used.

In one embodiment, a portable logging device is used to keep track of interactions with a multi-function peripheral (MFP). In one embodiment, the portable logging device consists only of write once memory. Prior to making a print or scan (or perform another interaction) with a MFP, the portable logging device is "connected" to the MFP either by insertion or wirelessly. Then a document is placed on the MFP and scanned. The MFP accesses the portable logging device to determine the hash function to compute on the scanned data (the hash function to use might be stored only as a name in which case the MFP would have to already know the algorithm, or the hash function could be stored as a set of computational instructions for the MFP). The MFP uses the hash function to compute the hash of the scanned document and stores that hash on the portable logging device. The MFP also accesses the last rolling hash, RN from the portable logging device and computes a new rolling hash for the portable logging device, e.g. by computing $R_{N+1} = \text{hash}(R_N \cdot \text{hash(document)})$; and the MFP stores this new hash on the portable logging device. The MFP may also store the instructions performed with the scan on the portable logging device, such as, for example, how many copiers were made, or an email address that the document was sent to. The MFP may also store a rolling checksum from the MFP's log on the portable logging device. This information could also be included in the rolling hash computed by the MFP and stored on the logging device. Finally, the MFP may store the hash of the document in a log on the MFP. The MFP may also store any rolling checksums computed for the portable logging device in the log of the MFP.

With such an operation, there are two independent logs that store information about the documents processed (e.g., copies made)on the MFP. Neither log contains the scanned data, but if the scanned data was stored elsewhere e.g. on a local disk or sent over a network, it would be possible to later determine which MFP scanned the data, and which portable logging device was used. Even without a scan of the data, it is possible to determine what portable logging devices were used with which MFPs from either the MFP log or the portable device log. Further, if a portable device is modified e.g. to remove evidence that a document was scanned with using that device, this modification can be detected by examining the MFP log.

In another embodiment, a portable logging device is used that is able to compute hash functions on the portable device. Suppose the portable logging device is used to gain access to a doorway, a PC, or an MFP, or in general, a service device. In one embodiment, the portable logging device is initialized with a rolling checksum ro, and the service device might be configured to allow access to a portable device that can prove knowledge of that checksum. When the portable logging device requests access, the service device issues a challenge string, $M_i$. In one embodiment, this string contains the information about the type of access being requested, the data, and some random bytes. The portable logging device computes $r_{i+1} = \text{hash}(r_i \cdot M_i)$ and returns $r_{i+1}$ to the service device. The service device can make the same computation to determine if the portable device started with $r_i$. Then the service device and the portable logging device record the new value of $r_{i+1}$ in the log which is used the next time access is requested. Because both devices keep a record of access, further authentication is possible. The service device can issue a challenge regarding a previous interaction, e.g. by providing $r_k$ where k<i, and asking for the portable device to return the strings that will hash to $r_k$. A portable device that computed $r_k = \text{hash}(r_{k-1} \cdot M_{k-1})$ can return $r_{k-1}$ and $M_{k-1}$; a device without the same history will not be able to generate a string that hashes to the requested value.

In one embodiment, a portable logging device examines the entries of a second log, and add entries to that log that apply additional hashing functions to the original entries of that second log. The device would retain a log of all such entries it has made. This in effect entangles the log of the portable device with that second log, and adds verification entries to the second log that indicates its entries have been examined.

In such cases, the portable logging device can include, as a part of the entry, the hash of the first log's entry concatenated with a secret. This secret would never be revealed by the portable logging device. However, the device could be asked to perform a similar hash at any time, allowing independent verification of the entries at a later time. This would have the effect of producing an "external certification" of the second log, where new entries are added which guarantee that the second log's entries have been read by a particular device, and applying additional hashing information to the second log. In one embodiment, this hashing of entry concatenated with a secret is implemented by tamper resistant hardware.

In one embodiment, portable logging device 500 stores one or more hash functions 512 in its memory and is able to transfer one or more hash functions to copier 520 (or other peripheral device) when inserted into copier 520. In one embodiment, the process of Figure 7 further comprises the portable device providing the second device with information to upgrade functionality of the second device to generate media identifiers (processing block 706). This is optional. The information may include one or more hash functions that the second device does not possess.

Note that the portable logging device may be used to compute a log that is associated with a person, a workgroup, a particular task (e.g., it could be attached to a pallet of goods or other work related item, and each person (e.g., fork-lift, or truck, or inspector, could make a log entry). In this way, all interactions that are made with respect to that person, workgroup, or task can be recorded.

In one embodiment, the portable logging device has a set of shared log entries with copier 520. Portable logging device 500 provides a series of one or more challenges to copier 520 to assure itself of the identity of copier 520. For example, portable logging device 500 and copier 520 may use an old rolling checksum and its corresponding entry in a log for gaining access to (logging-in) to copier 520. The two devices can then agree on a new log entry and rolling checksum to serve as a login value the next time the two are to interact.

As another example of using challenges, portable logging device 500 may prompt copier 520 to append a random sequence provided by portable logging device 500 to a particular entry in log 531 of copier 520 (e.g., entry 36) and requests copier 520 to return to portable logging device 500 a hash of that concatenation. Because portable logging device 500 knows what is in that entry, provides the random sequence to copier 520 and knows the hash function that copier 520 is to use, portable logging device 500 is able to determine the answer and compare it with the answer provided by copier 520. The random sequence could be media. This process may be repeated a number of times. By choosing random entries and random additional secrets, portable logging device 500 assures itself of the identity of the second device.

Note that in other embodiments, transfers of information between portable logging device 500 and copier 520 (or other peripheral) can be performed wirelessly using wireless communication functionality on both portable logging device 500 (shown as wireless communication functionality 505) and copier 520 (not shown). Also, other forms of wired communication may occur without the use of interface 503. In one embodiment, in such a case, the processing unit adds a media identifier to its log and causes the wireless communication interface to transmit information to and/or receive information from copier 520. In one embodiment, the processing unit adds an entry to its log, where the entry includes a media identifier that is based on content of media that was the subject of an interaction with second device.

The portable logging device could be a company badge or ID card, and used for official company activities. In one embodiment, the log on the card is entangled with logs of various devices in the office and, thus, provide irrefutable evidence that the portable logging device participated in transactions with these devices. In one embodiment, the log on the portable logging device is used as an ID card because it contains a list of previous transactions that could not have been duplicated without access to the data from the card and without doing all the actions done with the card.

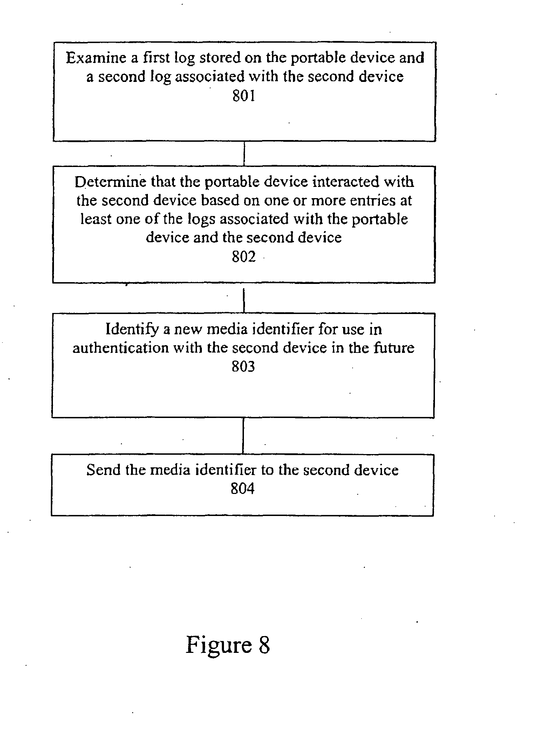

Figure 8 is a flow diagram of one embodiment of a process for authenticating an interaction between a portable logging device and a second device. The process is performed by processing logic that may comprise hardware (circuitry, dedicated logic, etc.), software (such as is run on a general purpose computer system or a dedicated machine), or a combination of both.

Referring to Figure 8, the process begins by processing logic examining a first log stored on the portable device and a second log associated with the second device (processing block 801).

Next, processing logic determining that the portable device interacted with the second device based on one or more entries in at least one of the logs associated with the portable device and the second device (processing block 802). In one embodiment, determining that the portable device interacted with the second device is based on one or more identical entries appearing in both the first and second logs. In one embodiment, at least one of the entries includes a media identifier that is based on content of media that was the subject of the interaction between the portable logging device and the second device.

In one embodiment, a determination that the portable logging device interacted with the second device is based the results of one or more challenges put forth by the portable logging device to the second device using entries appearing in at least the log of the second device. In one embodiment, a determination that the portable logging device interacted with the second device may be performed by sending one or more challenges to the second device that require a the second device to send information to the portable logging device, and thereafter, determining whether the information matches data generated by the portable logging device. If it matches, the portable logging device is able to confirm the identify of the second device. In one embodiment, at least one of the challenges involves performing one or more operations on one log entry of a log associated with the second device and providing results of the one or more operations as the information received from the second device.

In another embodiment, a third device determines whether the portable device interacted with the second device by accessing the logs of the portable logging device and the second device and determining that the portable device interacted with the second device based on one or more entries in the first and second logs.

In one embodiment, after the authentication process has completed, the process of Figure 8 may further comprise processing logic in the portable device identifying a new media identifer for use in authentication with the second device in the future (processing bock 803), sending that media identifier to the second device (processing block 804), and storing the new identifier in a log of the portable logging device and a log of the second device (processing block 805).

An Example of a Computer System

Figure 9 is a block diagram of a computer system that may perform one or more of the operations described herein. Referring to Figure 9, computer system 900 may comprise an exemplary client or a server computer system. Computer system 900 comprises a communication mechanism or bus 911 for communicating information, and a processor 912 coupled with bus 911 for processing information. Processor 912 includes a microprocessor, but is not limited to a microprocessor, such as, for example, PentiumTM, etc.

System 900 further comprises a random access memory (RAM), or other dynamic storage device 104 (referred to as main memory) coupled to bus 911 for storing information and instructions to be executed by processor 912. Main memory 904 also may be used for storing temporary variables or other intermediate information during execution of instructions by processor 912.

Computer system 900 also comprises a read only memory (ROM) and/or other static storage device 906 coupled to bus 911 for storing static information and instructions for processor 912, and a data storage device 907, such as a magnetic disk or optical disk and its corresponding disk drive. Data storage device 907 is coupled to bus 911 for storing information and instructions.

Computer system 900 may further be coupled to a display device 921, such as a cathode ray tube (CRT) or liquid crystal display (LCD), coupled to bus 911 for displaying information to a computer user. An alphanumeric input device 922, including alphanumeric and other keys, may also be coupled to bus 911 for communicating information and command selections to processor 912. An additional user input device is cursor control 923, such as a mouse, trackball, trackpad, stylus, or cursor direction keys, coupled to bus 911 for communicating direction information and command selections to processor 912, and for controlling cursor movement on display 921.

Another device that may be coupled to bus 911 is hard copy device 924, which may be used for printing instructions, data, or other information on a medium such as paper, film, or similar types of media. Furthermore, a sound recording and playback device, such as a speaker and/or microphone may optionally be coupled to bus 911 for audio interfacing with computer system 900. Another device that may be coupled to bus 911 is a wired/wireless communication capability 925 to communication to a phone or handheld palm device.

Note that any or all of the components of system 900 and associated hardware may be used in the present invention. However, it can be appreciated that other configurations of the computer system may include some or all of the devices.

In one aspect of the present invention, there is provided

(1) A method for authenticating an interaction comprising:

receiving a checksum from a first device;
searching a log for an instance of the checksum using a second device; and
allowing a request if the checksum is found.

(2) The method defined in above-mentioned (1) wherein the second device is a portable device.
(3) The method defined in above-mentioned (2) wherein the checksum is generated from a media identifier that is based on content of media that was the subject of an interaction between the portable device and the first device.
(4) The method defined in above-mentioned (2) further comprising:

accessing the first and second logs using a third device, wherein the third device determines that the portable device interacted with the second device based on one or more entries in the first and second logs.

(5) The method defined in above-mentioned (2) wherein the portable device comprises a SIM card.
(6) The method defined in above-mentioned (2) wherein the portable device comprises an ID card.
(7) The method defined in above-mentioned (2) further comprising the portable device sending the media identifer to the second device for authentication.
(8) The method defined in above-mentioned (7) further comprising:

identifying a new media identifier for use in authentication with the second device in the future; and
storing the new identifier in the first log.

(9) The method defined in above-mentioned (1) further comprising determining that the second device interacted with the first device, including:

sending one or more challenges to the first device;
receiving the information from the first device;
determining whether the information matches data generated by the second device; and
determining whether the first device has been identified based on results of matching.

(10) The method defined in above-mentioned (9) wherein at least one of the challenges involves performing one or more operations on one log entry of a log associated with the first device and providing results of the one or more operations as the information received from the first device.
In one aspect of the present invention, there is provided
(11) A method comprising:

calculating a media identifier of media on a portable device:

creating a rolling checksum using the media identifier; and
sending the rolling checksum to a second device.

(12) The method defined in above-mentioned (11) wherein the portable device comprises a SIM card.
(13) The method defined in above-mentioned (11) wherein the portable device comprises an ID card.
In one aspect of the present invention, there is provided
(14) A method comprising:

a portable device having a first log and examining entries of a second log;
adding one or more entries to the second log; and
including the one or more entries in the first log.

In one aspect of the present invention, there is provided
(15) A portable device comprising:

a wireless communication interface to send information wireless;
a memory to store a first log;
an input unit to receive media;
a processing unit coupled to add a media identifier to the first log and to cause the wireless communication interface to transmit and receive information, wherein the processing unit adds an entry to the first log, the entry including a media identifier that is based on content of media that was the subject of an interaction with second device, and further wherein the first log is entangled with a second log associated with the second device by receiving information from the second device and storing that information in the first log.

(16) The portable device defined in above-mentioned (15) wherein the memory stores the media identifier and the processing unit causes the media identifier to be transmitted through the wireless communication interface to the second device for inclusion in a log associated with the second device.
(17) The portable device defined in above-mentioned (15) wherein the memory stores a hash function and the processing unit causes the hash function to be transmitted through the wireless communication interface to the second device.
In one aspect of the present invention, there is provided
(18) An article of manufacture having one or more computer-readable storage media storing instructions which, when executed by a system, cause the system to perform a method for authenticating an interaction comprising:

examining a first log stored on a first, portable device and a second log associated with a second device; and
determining that the portable device interacted with the second device based on one or more entries in the first and second logs.

**Claims**

1.  A portable device, comprising :

means for receiving an electronic file (513, 541) from a second device (520), wherein the electronic file is the subject of a print transaction or scan transaction between the portable device and the second device, the second device having a copying or a scan or a printing functionality, respectively;

means (501) for calculating (702) a media identifier of the electronic file (513, 541), wherein the media identifier is a hash value resulting from applying a hashing function to a plain text portion contained in the electronic file; and

means for creating a rolling checksum by providing a concatenation of a previous checksum and a message content of the electronic file (513, 541) or the media identifier to a hash function, wherein the previous checksum is a checksum assigned to the electronic file (513, 514) by the second device (520);

**characterized by** (513, 541) means (500) for generating the media identifier in response to receiving the electronic file (513, 541), wherein the portable device comprises means for sending the rolling checksum to the second device (520) by providing an indication to the second device (520) that the rolling checksum corresponds to the electronic file (513, 541) provided by the second device (520).

2. The device defined in Claim 1, further **characterized by**:

means for receiving a second media identifier from the second device (520) after providing the rolling checksum to the second device (520); wherein

the portable device comprises means (502) for storing the second media identifier in a log (511) maintained by the portable device.

3. The device defined in Claim 2, **characterized in that** the first media identifier and the second media identifier are generated with different hash functions (512).

4. The device defined in Claim 1, further **characterized in that** the portable device is configured to provide the media (513) to the second device (520).

5. The device defined in Claim 1, **characterized in that** the hashing function (512) is the MD5 hashing algorithm.

6. The device defined in Claim 1, **characterized in that** the media (513, 541) is a document and the media identifier is a document identifier.

7. The device defined in Claim 1, **characterized in that** the portable device comprises means for providing (706) the second device (520) with information to upgrade functionality of the second device (520) to generate media identifiers.

8. A method, comprising:

receiving, at a portable device, an electronic file (513, 541) from a second device (520), wherein the electronic file is the subject of a print transaction or scan transaction between the portable device and the second device, the second device having a copying or a scan or a printing functionality, respectively;

calculating (702), on the portable device, a media identifier of the electronic file (513, 541), wherein the media identifier is a hash value resulting from applying a hashing function to a plain text portion contained in the electronic file;

creating a rolling checksum by providing a concatenation of a previous checksum and a message content of the electronic file (513, 541) or the media identifier to a hash function, wherein the previous checksum is a checksum assigned to the electronic file (513, 514) by the second device (520; and

sending the rolling checksum from the portable device to the second device (520);

**characterized by** (513, 541) generating, at the portable device, the media identifier in response to receiving the electronic file (513, 541), wherein sending the rolling checksum to the second device (520) comprises providing an indication to the second device (520) that the rolling checksum corresponds to the electronic file (513, 541) provided by the second device (520).

9. The method defined in Claim 8, further **characterized by**:

receiving a second media identifier from the second device (520) after providing the rolling checksum to the second device (520); and

the portable device storing the second media identifier in a log maintained by the portable device.

10. The method defined in Claim 9, **characterized in that** the first media identifier and the second media identifier are generated with different hash functions (512).

11. The method defined in Claim 8, further **characterized by** the portable device providing the media (513) to the second device (520).

12. The method defined in Claim 8, **characterized in that** the hashing function (512) is the MD5 hashing algorithm.

13. The method defined in Claim 8, **characterized in that** the media (513, 541) is a document and the media identifier is a document identifier.

14. The method defined in Claim 8, further **characterized by** the portable device providing (706) the second device (520) with information to upgrade functionality of the second device (520) to generate media identifiers.

**Patentansprüche**

1. Tragbare Einrichtung, umfassend:

ein Mittel zum Empfangen einer elektronischen Datei (513, 541) von einer zweiten Einrichtung (520), wobei die elektronische Datei Gegenstand eines Druckvorgangs oder eines Abtastvorgangs zwischen der tragbaren Einrichtung und der zweiten Einrichtung ist, wobei die zweite Einrichtung eine Kopier- bzw. Abtast- bzw. Druckfunktion aufweist;

ein Mittel (501) zum Berechnen (702) eines Medienidentifikators der elektronischen Datei (513, 541), wobei der Medienidentifikator ein Hashwert ist, der sich aus Anwendung einer Hashfunktion auf einen in der elektronischen Datei enthaltenen Klartextbereich ergibt;

ein Mittel zum Erzeugen einer fortlaufenden Prüfsumme durch Bereitstellen einer Verkettung einer vorherigen Prüfsumme und eines Nachrichteninhalts des elektronischen Datei (513, 541) oder des Medienidentifikators mit einer Hashfunktion, wobei die vorherige Prüfsumme eine der elektronischen Datei (513, 514) von der zweiten Einrichtung (520) zugewiesene Prüfsumme ist;

**gekennzeichnet durch** (513, 541) ein Mittel (500) zum Erzeugen des Medienidentifikators in Erwiderung auf ein Empfangen der elektronischen Datei (513, 541), wobei die tragbare Einrichtung ein Mittel zum Senden der fortlaufenden Prüfsumme an die zweite Einrichtung (520) **durch** Bereitstellen einer Angabe für die zweite Einrichtung (520), dass die fortlaufende Prüfsumme der von der zweiten Einrichtung (520) bereitgestellten elektronischen Datei (513, 541) entspricht, enthält.

2. Einrichtung wie in Anspruch 1 definiert, ferner **gekennzeichnet durch**:

ein Mittel zum Empfangen eines zweiten Medienidentifikators von der zweiten Ein richtung (520) nach Bereitstellen der fortlaufenden Prüfsumme für die zweite Einrichtung (520); wobei

die tragbare Einrichtung Mittel (502) zum Speichern des zweiten Medienidentifikators in einem von der tragbaren Einrichtung bereit gehaltenen Protokoll (511) enthält.

3. Einrichtung wie in Anspruch 2 definiert, **dadurch gekennzeichnet, dass** der erste Medienidentifikator und der zweite Medienidentifikator mit unterschiedlichen Hashfunktionen

(512) erzeugt werden.

4. Einrichtung wie in Anspruch 1 definiert, ferner **dadurch gekennzeichnet, dass** die tragbare Einrichtung eingerichtet ist, das Medium (513) für die zweite Einrichtung (520) bereitzustellen.

5. Einrichtung wie in Anspruch 1 definiert, **dadurch gekennzeichnet, dass** die Hashfunktion (512) ein MD5-Hashalgorithmus ist.

6. Einrichtung wie in Anspruch 1 definiert, **dadurch gekennzeichnet, dass** das Medium (513, 541) ein Dokument ist und der Medienidentifikator ein Dokumentenidentifikator ist.

7. Einrichtung wie in Anspruch 1 definiert, **dadurch gekennzeichnet, dass** die tragbare Einrichtung ein Mittel zum Bereitstellen (706) von Informationen zum Höherstufen der Funktionalität der zweiten Einrichtung (520) für die zweite Einrichtung (520) enthält.

8. Verfahren, umfassend:

Empfangen, an einer tragbaren Einrichtung, einer elektronischen Datei (513, 541) von einer zweiten Einrichtung (520), wobei die elektronische Datei (513, 541) Gegenstand eines Druckvorgangs oder eines Abtastvorgangs zwischen der tragbaren Einrichtung und der zweiten Einrichtung ist, wobei die zweite Einrichtung eine Kopier- bzw. Abtast- bzw. Druckfunktion aufweist;

Berechnen (702), auf der tragbaren Einrichtung, eines Medienidentifikators der elektronischen Datei (513, 541), wobei der Medienidentifikator ein Hashwert ist, der sich aus Anwendung einer Hashfunktion auf einen in der elektronischen Datei enthaltenen Klartextbereich ergibt;

Erzeugen einer fortlaufenden Prüfsumme durch Bereitstellen einer Verkettung einer vorherigen Prüfsumme und eines Nachrichteninhalts des elektronischen Datei (513, 541) oder des Medienidentifikators mit einer Hashfunktion, wobei die vorherige Prüfsumme eine der elektronischen Datei (513, 514) von der zweiten Einrichtung (520) zugewiesene Prüfsumme ist; und

Senden der fortlaufenden Prüfsumme von der tragbaren Einrichtung an die zweite Einrichtung (520); **gekennzeichnet durch** (513, 541) Erzeugen, auf der tragbaren Einrichtung, des Medienidentifikators in Erwiderung auf ein Empfangen der elektronischen Datei (513, 541), wobei die tragbare Einrichtung ein Mittel zum Senden der fortlaufenden Prüfsumme an die zweite Einrichtung (520) **durch** Bereitstellen einer Angabe für die zweite Einrichtung (520), dass die fortlaufende Prüfsumme der von der zweiten Einrichtung (520) bereitgestellten elektronischen Datei (513, 541) entspricht.

9. Verfahren wie in Anspruch 8 definiert, ferner **gekennzeichnet durch**:

Empfangen eines zweiten Medienidentifikators von der zweiten Einrichtung (520) nach Bereitstellen der fortlaufenden Prüfsumme für die zweite Einrichtung (520); und

ferner **dadurch** gekennzeichnet, dass die tragbare Einrichtung den zweiten Medienidentifikator in einem von der tragbaren Einrichtung bereit gehaltenen Protokoll speichert.

10. Verfahren wie in Anspruch 9 definiert, **dadurch gekennzeichnet, dass** der erste Medienidentifikator und der zweite Medienidentifikator mit unterschiedlichen Hashfunktionen

(512) erzeugt werden.

11. Verfahren wie in Anspruch 8 definiert, ferner **gekennzeichnet dadurch, dass** die tragbare Einrichtung das Medium (513) für die zweite Einrichtung bereitstellt.

12. Verfahren wie in Anspruch 8 definiert, **dadurch gekennzeichnet, dass** die Hashfunktion (512) ein M DS-Hashalgorithmus ist.

13. Verfahren wie in Anspruch 8 definiert, **dadurch gekennzeichnet, dass** das Medium (513, 541) ein Dokument ist und der Medienidentifikator ein Dokumentenidentifikator ist.

14. Verfahren wie in Anspruch 8 definiert, **dadurch gekennzeichnet, dass** die tragbare Einrichtung Informationen zum Höherstufen der Funktionalität der zweiten Einrichtung (520) für die zweite Einrichtung (520) bereitstellt (706).

**Revendications**

1. Dispositif portable, comprenant :

des moyens pour recevoir un fichier électronique (513, 541) en provenance d'un second dispositif (520), où le fichier électronique est le sujet d'une transaction d'impression ou d'une transaction de scannage entre le dispositif portable et le second dispositif, le second dispositif ayant une fonctionnalité de copie ou de scannage ou d'impression, respectivement ;

des moyens (501) pour calculer (702) un identificateur de support du fichier électronique (513, 541), où l'identificateur de support est une valeur de hachage résultant de l'application d'une fonction de hachage à une partie de texte en clair contenue dans le fichier électronique ; et

des moyens pour créer une somme de contrôle roulante en fournissant une concaténation d'une somme de contrôle précédente et d'un contenu de message du fichier électronique (513, 541) ou de l'identificateur de support à une fonction de hachage, où la somme de contrôle précédente est une somme de contrôle assignée au fichier électronique (513, 514) par le second dispositif (520) ;

**caractérisé par** (513, 541) des moyens (500) pour générer l'identificateur de support en réponse à la réception du fichier électronique (513, 541), où le dispositif portable comprend des moyens pour envoyer la somme de contrôle roulante au second dispositif (520) en fournissant une indication au second dispositif (520) que la somme de contrôle roulante correspond au fichier électronique (513, 541) fourni par le second dispositif (520).

**2.** Dispositif selon la revendication 1, en outre **caractérisé par** :

des moyens pour recevoir un second identificateur de support en provenance du second dispositif (520) après la fourniture de la somme de contrôle roulante au second dispositif (520) ; où le dispositif portable comprend des moyens (502) pour stocker le second identificateur de support dans un journal (511) maintenu par le dispositif portable.

**3.** Dispositif selon la revendication 2, **caractérisé en ce que** le premier identificateur de support et le second identificateur de support sont générés avec des fonctions de hachage différentes (512).

**4.** Dispositif selon la revendication 1, en outre **caractérisé en ce que** le dispositif portable est configuré pour fournir le support (513) au second dispositif (520).

**5.** Dispositif selon la revendication 1, **caractérisé en ce que** la fonction de hachage (512) est l'algorithme de hachage MD5.

**6.** Dispositif selon la revendication 1, **caractérisé en ce que** le support (513, 541) est un document et l'identificateur de support est un identificateur de document.

**7.** Dispositif selon la revendication 1, **caractérisé en ce que** le dispositif portable comprend des moyens pour fournir (706) au second dispositif (520) des informations pour mettre à niveau la fonctionnalité du second dispositif (520) pour générer des identificateurs de support.

**8.** Procédé, comprenant :

la réception, au niveau d'un dispositif portable, d'un fichier électronique (513, 541) en provenance d'un second dispositif (520), où le fichier électronique est le sujet d'une transaction d'impression ou d'une transaction de scannage entre le dispositif portable et le second dispositif, le second dispositif ayant une fonctionnalité de copie ou de scannage ou d'impression, respectivement ;
le calcul (702), sur le dispositif portable, d'un identificateur de support du fichier électronique (513, 541), où l'identificateur de support est une valeur de hachage résultant de l'application d'une fonction de hachage à une partie de texte en clair contenue dans le fichier électronique ;
la création d'une somme de contrôle roulante en fournissant une concaténation d'une somme de contrôle précédente et d'un contenu de message du fichier électronique (513, 541) ou de l'identificateur de support à une fonction de hachage, où la somme de contrôle précédente est une somme de contrôle assignée au fichier électronique (513, 514) par le second dispositif (520) ; et
l'envoi de la somme de contrôle roulante du dispositif portable au second dispositif (520) ;
**caractérisé par** (513, 541) la génération, au niveau du dispositif portable, de l'identificateur de support en réponse à la réception du fichier électronique (513, 541), où l'envoi de la somme de contrôle roulante au second dispositif (520) comprend la fourniture d'une indication au second dispositif (520) que la somme de contrôle roulante correspond au fichier électronique (513, 541) fourni par le second dispositif (520).

**9.** Procédé selon la revendication 8, en outre **caractérisé par** :

la réception d'un second identificateur de support en provenance du second dispositif (520) après la fourniture de la somme de contrôle roulante au second dispositif (520) ; et
le dispositif portable stockant le second identificateur de support dans un journal maintenu par le dispositif portable.

EP 1 998 534 B1

**10.** Procédé selon la revendication 9, **caractérisé en ce que** le premier identificateur de support et le second identificateur de support sont générés avec des fonctions de hachage différentes (512).

**11.** Procédé selon la revendication 8, en outre **caractérisé par** le dispositif portable fournissant le support (513) au second dispositif (520).

**12.** Procédé selon la revendication 8, **caractérisé en ce que** la fonction de hachage (512) est l'algorithme de hachage MD5.

**13.** Procédé selon la revendication 8, **caractérisé en ce que** le support (513, 541) est un document et l'identificateur de support est un identificateur de document.

**14.** Procédé selon la revendication 8, en outre **caractérisé par** le dispositif portable fournissant (706) au second dispositif (520) des informations pour mettre à niveau la fonctionnalité du second dispositif (520) pour générer des identificateurs de support.

Figure 1

Figure 2

Store information, including a rolling
checksum of Log A, into Log B
— 301

Store information (e.g., server name of
Log B, file name of Log B, URL of Log B,
position in Log B where entanglement
occurred), possibly including a rolling
checksum of Log B into Log A
— 302

Figure 3

```
┌─────────────────────────────────┐
│ Search all known logs for a     │── 401
│ message (or message hash)       │
└─────────────────────────────────┘
                │
                ▼
┌─────────────────────────────────┐
│ Verify rolling checksums        │
│ following the entry having the  │── 402
│ message (or the message hash)   │
└─────────────────────────────────┘
                │
                ▼
┌─────────────────────────────────┐
│ Add rolling hashes that appear  │
│ after the message (or hash) of  │
│ interest to a list of hashes    │── 403
│ and adds any logs referenced by │
│ current log to a list of logs   │
│ (optional)                      │
└─────────────────────────────────┘
                │
                ▼
┌─────────────────────────────────┐
│ Search for all hashes in the    │── 404
│ list of hashes in one of the    │
│ known logs                      │
└─────────────────────────────────┘
                │
                ▼
            ╱ 405 ╲
           ╱ Does a ╲      No
          ╱ rolling  ╲───────────┐
          ╲ hash     ╱           │
           ╲ appear ╱            │
            ╲in the╱             │
             ╲log?╱              │
               │                 │
              Yes                │
                │                │
                ▼                │
┌─────────────────────────────┐  │
│ Add log to the list of logs │── 406
│ supporting the original     │  │
│ message                     │  │
└─────────────────────────────┘  │
                │                │
                ▼                │
┌─────────────────────────────┐  │
│ Add rolling checksums that  │── 407
│ appear in the log after the │  │
│ hash of interest to the     │  │
│ hash list                   │  │
└─────────────────────────────┘  │
                │                │
                ▼                │
┌─────────────────────────────┐  │
│ Add any logs references by  │── 408
│ that log to the log list    │  │
└─────────────────────────────┘  │
                │                │
                ▼                │
            ╱ 409 ╲              │
    Yes    ╱ Any more╲           │
  ┌───────╱  known    ╲◄─────────┘
  │       ╲ logs to   ╱
  │        ╲ search? ╱
  │          ╲     ╱
  │            │
  │           No
  │            ▼
  │      ╭───────────╮
  │      │ Process   │
  │      │ ends      │
  │      ╰───────────╯
```

Figure 4

Figure 5

EP 1 998 534 B1

Maintain a log on the portable device

601

Entangle the portable device's log with a log of the
second device by receiving information to include
in the portable device's log from the second device
or storing information from the portable device
in the second device

602

Figure 6

Begin with a portable device having an interaction
with a second device regarding media
701

Generate the first media identifier
corresponding to the media

702

Provide a media identifier corresponding to the
media to the second device for inclusion in a log
associated with the second device
703

Receive a second media identifier from the second
device after providing the portable logging device
sends the first media identifier to the second device
704

Store the second media identifier in a log
maintained by the portable device
705

Provide the second device with information to
upgrade functionality of the second device to
generate media identifiers
706

Figure 7

Examine a first log stored on the portable device and
a second log associated with the second device
801

Determine that the portable device interacted with
the second device based on one or more entries at
least one of the logs associated with the portable
device and the second device
802

Identify a new media identifier for use in
authentication with the second device in the future
803

Send the media identifier to the second device
804

# Figure 8

900

```
┌──────────┐   ┌──────────┐   ┌──────────┐   ┌──────────┐
│   MAIN   │   │  STATIC  │   │   MASS   │   │          │
│  MEMORY  │   │  MEMORY  │   │ STORAGE  │   │ PROCESSOR│
│          │   │          │   │  MEMORY  │   │          │
│   904    │   │   906    │   │          │   │   912    │
│          │   │          │   │   907    │   │          │
└────┬─────┘   └────┬─────┘   └────┬─────┘   └────┬─────┘
     ↕              ↕              ↕              ↕
┌────────────────────────────────────────────────────────┐
│                          BUS                           │
│                          911                           │
└────────────────────────┬───────────────────────────────┘
                         ↕
```

```
┌──────────┐  ┌──────────┐  ┌──────────┐  ┌──────────┐  ┌──────────┐
│ EXTERNAL │  │          │  │          │  │  CURSOR  │  │   HARD   │
│ NETWORK  │  │ DISPLAY  │  │ KEYBOARD │  │ CONTROL  │  │   COPY   │
│INTERFACE │  │          │  │          │  │  DEVICE  │  │  DEVICE  │
│          │  │   921    │  │   922    │  │          │  │          │
│   920    │  │          │  │          │  │   923    │  │   924    │
└──────────┘  └──────────┘  └──────────┘  └──────────┘  └──────────┘
```

Figure 9

**EP 1 998 534 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 88799804 A
- US 20060010095 A
- US 5978475 A